# FASCICULE DE BREVET EUROPEEN

(11) **EP 4 199 462 B1**
(45) Date de publication et mention de la délivrance du brevet: **19.11.2025**
(21) Numéro de dépôt: 22213706.9
(22) Date de dépôt: 15.12.2022
(51) Int. Cl.: H04L 45/00, H04W 40/12, H04W 40/14, H04W 40/22

(54) **MISE EN OEUVRE DYNAMIQUE ET CONJOINTE DE REGROUPEMENT DE NOEUDS ET DE SÉLECTION DE CONFIGURATION DE GROUPE AU SEIN D'UN RÉSEAU DE COMMUNICATION SANS FIL AD HOC DE NOEUDS MOBILES**
DYNAMISCHE UND GEMEINSAME IMPLEMENTIERUNG VON KNOTENGRUPPIERUNG UND GRUPPENKONFIGURATIONSAUSWAHL IN EINEM AD-HOC-MOBILFUNKKOMMUNIKATIONSNETZWERK
DYNAMICALLY AND JOINTLY IMPLEMENTING NODE GROUPING AND GROUP CONFIGURATION SELECTION WITHIN A MOBILE NODE AD HOC WIRELESS COMMUNICATION NETWORK

(30) Priorité: 16.12.2021 FR 2113646
(43) Date de publication de la demande: 21.06.2023
(73) Titulaire: THALES, 92190 Meudon (FR)
(72) Inventeur: CHAYOT, Romain, 92622 Gennevilliers Cedex (FR); LETURC, Xavier, 92622 Gennevilliers Cedex (FR); LE MARTRET, Christophe, 92622 Gennevilliers Cedex (FR); MASSIN, Raphaël, 92622 Gennevilliers Cedex (FR)
(74) Mandataire: Atout PI Laplace

(56) Documents cités:
- EP-B1- 3 057 267
- US-A1- 2002 103 893
- MURAKAMI N ET AL: "Effective Division and Merger of the Autonomous Clustering Scheme for Highly Mobile Large Ad Hoc Networks", CONFERENCE PROCEEDINGS / IEEE INTERNATIONAL SYMPOSIUM ON CIRCUITS AND SYSTEMS (ISCAS) : MAY 23 - 26, 2005, INTERNATIONAL CONFERENCE CENTER, KOBE, JAPAN, IEEE SERVICE CENTER, PISCATAWAY, NJ, 23 May 2005 (2005-05-23), pages 2967 - 2970, XP010816215, ISBN: 978-0-7803-8834-5, DOI: 10.1109/ISCAS.2005.1465250
- KAKUDA YOSHIAKI ET AL: "Integrated Real-Time Self-Organized Control for Transmission Interval and Power in Autonomous Clustering of Mobile Ad Hoc Networks", 2015 IEEE 12TH INTL CONF ON UBIQUITOUS INTELLIGENCE AND COMPUTING AND 2015 IEEE 12TH INTL CONF ON AUTONOMIC AND TRUSTED COMPUTING AND 2015 IEEE 15TH INTL CONF ON SCALABLE COMPUTING AND COMMUNICATIONS AND ITS ASSOCIATED WORKSHOPS (UIC-ATC-SCALCOM), IE, 10 August 2015 (2015-08-10), pages 521 - 526, XP032926314, DOI: 10.1109/UIC-ATC-SCALCOM-CBDCOM-IOP.2015.106
- SAIGANESH GOPALAN ET AL: "FPGA Implementation and Analyses of Cluster Maintenance Algorithms in Mobile Ad-Hoc Networks", 1 January 2005, ADVANCES IN COMPUTER SYSTEMS ARCHITECTURE LECTURE NOTES IN COMPUTER SCIENCE;;LNCS, SPRINGER, BERLIN, DE, PAGE(S) 714 - 727, ISBN: 978-3-540-29643-0, XP019022403

## Description

### Domaine technique :

L'invention se situe dans le domaine des réseaux de communication sans fil ad hoc mobiles. Les applications ayant recours aux réseaux ad hoc couvrent un très large spectre : conférences, manifestations, opérations de secours (incendies, tremblement de terre, catastrophe naturelle, etc.), missions d'exploration...

L'invention concerne plus spécifiquement les aspects de clusterisation et de configuration de cluster mis en œuvre dans ces réseaux et permettant aux nœuds de s'adapter en temps réel aux diverses fluctuations relatives aux conditions du canal radio, aux trafics, aux missions et aux différents mouvements des nœuds eux-mêmes ou de leur entourage.

Par clusterisation, on entend le regroupement de nœuds entre eux, créant ainsi un ou des clusters (ou groupes) de nœuds, comprenant la sélection des nœuds parmi ceux du réseau ad hoc qui vont faire partie d'un même groupe, en fonction de critères prédéfinis. À titre d'illustration, N figure dans la plage [20-30] et g dans la plage [4-5]. N peut prendre des valeurs diverses, en centaines ou milliers. La valeur de g dépend de la forme d'onde, du trafic à écouler et plus globalement des services associés. Grouper ainsi des nœuds en clusters, associés chacun à un chef de cluster, présente un certain nombre d'avantages techniques, par exemple cela permet de limiter les échanges et la taille des tables de routage et de réduire l'impact de la mobilité sur la topologie entière.

La ressource spectrale étant limitée, il est souvent nécessaire de sélectionner la configuration du cluster, notamment le canal logique (un canal logique étant une ressource temps fréquence allouée sur lesquels les nœuds peuvent échanger de l'information) sur lequel les nœuds d'un cluster communiquent, en fonction d'un certain nombre de critères, en vue par exemple de gérer spatialement les fréquences/canaux logiques, par exemple de gérer la réutilisation spatiale (il peut parfois y avoir moins de canaux logiques que de clusters), en conservant un niveau d'interférence suffisamment faible pour permettre une bonne qualité des communications.

Par configuration dans ce document, on entend l'affectation à un cluster d'un ensemble d'attributs du cluster incluant au minimum son canal logique (sa couleur) ; d'autres attributs peuvent en outre être attribués sélectivement aux nœuds du cluster lors de l'opération de configuration, tels que, par exemple et de façon non exhaustive, l'ordonnancement des communications entre les nœuds du cluster et l'allocation de ressources (puissance d'émission, type de codage et/ou de modulation).

### Technique antérieure :

On connaît par exemple le document FR3032848 « procédé pour générer des groupes au sein d'un réseau radio ad hoc » traitant exclusivement de la clusterisation ou encore le document FR3004309 « procédé distribué pour sélectionner une configuration dans les réseaux mobiles » traitant de la configuration.

Ces solutions sont indépendantes et ne traitent pas le problème conjoint. Il ne suffit pas d'associer tel quel les deux solutions pour que cela fonctionne. FR3032848 « PROCEDE POUR GENERER DES GROUPES AU SEIN D'UN RESEAU RADIO AD HOC » traite du regroupement de nœuds de manière dynamique et distribuée dans un réseau mobile ad hoc. Cependant, il ne traite pas de la configuration de cet ensemble de nœuds.
Le procédé dans FR3004309 permet de déterminer la configuration d'un ensemble de nœuds déjà formé en cluster et ainsi fixe, et ne permet donc pas de gérer des regroupements dynamiques de nœuds.

Il est donc impératif d'appréhender de manière conjointe la formation dynamique de clusters et la configuration dynamique de ces clusters en tenant compte des interactions entre formation et configuration dynamiques de clusters.

Cette invention a pour but de proposer une solution pour conjointement regrouper de manière distribuée et dynamique des nœuds et pour déterminer la configuration des ensembles de nœuds ainsi formés, tout en mutualisant la signalisation nécessaire aux deux aspects.

### Résumé de l'invention :

A cet effet, suivant un premier aspect, la présente invention décrit un procédé de mise en œuvre dynamique conjointe de clusterisation de nœuds et de sélection de configuration de cluster au sein d'un réseau de communication ad hoc sans fil de nœuds mobiles, un cluster comprenant des nœuds, y compris un nœud désigné chef de cluster, partageant au moins un canal logique commun affecté au cluster, ledit procédé étant caractérisé en ce que :
chaque nœud d'un cluster est contraint d'itérer le cycle de fonctionnement comprenant les étapes suivantes :
i/ déclenchement d'une étape de découverte de voisinage déterminant des informations actualisées comprenant l'identification de nœud(s) voisins et le calcul d'indices de qualité des liens radio entre lesdits nœuds voisins et ledit nœud ;
ii/ collecte par le nœud chef de cluster desdites informations actualisées par les nœuds dudit cluster et actualisation de métriques de configuration en fonction desdites informations ;
iii/ sélection d'une configuration de cluster par le nœud chef de cluster en fonction des métriques de configuration actualisées, la sélection de la configuration comprenant au moins la sélection du canal logique associé au cluster et, si la configuration sélectionnée est différente de la configuration courante du cluster, déclenchement, par le nœud chef de cluster auprès de chaque nœud du cluster, de l'implémentation de la nouvelle configuration sélectionnée ; puis
iv/ vérification qu'un ensemble de conditions relatives à la configuration mise en œuvre dans le cluster est bien vérifié, ledit ensemble de conditions déterminant si la stabilité de la configuration mise en œuvre dans le cluster est supérieure à un seuil fixé ; et si et seulement si l'ensemble de conditions est vérifié, déclenchement d'une évaluation du cluster par le nœud chef de cluster en fonction des informations actualisées à l'étape i/ et dans le cas où ladite étape d'évaluation détermine qu'une action de fusion du cluster avec un autre cluster ou de division du cluster ou de départ d'un ou plusieurs nœuds du cluster vers un autre cluster est à réaliser, mise en œuvre de ladite action suite au déclenchement auprès des nœuds du cluster, de ladite action ; si l'ensemble de conditions n'est pas vérifié, l'étape v est directement mise en œuvre :
v/ itération des étapes i à iv, qu'une nouvelle configuration ait été implémentée ou non, qu'une action de fusion ou de division ou de départ ait été implémentée ou non.

L'invention permet de réguler et d'ordonnancer les fonctionnalités de configuration et de clusterisation, tout en permettant de mutualiser l'exploitation des informations de topologie collectées en début de cycle.

Dans des modes de réalisation, un tel procédé comprendra en outre l'une au moins des caractéristiques suivantes :
- ledit ensemble de conditions comporte une ou plusieurs conditions, relatives à la configuration, parmi :
   ▪ aucun déclenchement de nouvelle configuration n'a été déclenchée à l'étape iii du cycle courant ;
   ▪ un temps supérieur à un seuil minimum prédéfini s'est écoulé depuis le dernier changement de configuration ;
   ▪ la configuration actuelle est mise en œuvre depuis les derniers θ_{stab} cycles, où θ_{stab} est une valeur entière prédéfinie ;
- dans l'étape de configuration de cluster, le nœud chef de cluster effectue une opération de désignation d'un nouveau chef de cluster parmi les nœuds du cluster en fonction desdites informations actualisées et le nœud chef de cluster transmet aux nœuds du cluster, au sein d'un même message, le nouveau canal logique sélectionné et l'indication du nouveau chef de cluster désigné ;
- dans l'étape d'évaluation du cluster, il est préalablement déterminé par le nœud chef de cluster, en fonction desdites informations actualisées, si le cluster vérifie un ensemble de conditions définissant les caractéristiques requises d'un cluster, et s'il est déterminé que le cluster ne vérifie pas lesdites conditions, une division de cluster est évaluée par le nœud chef du cluster ; s'il est déterminé que le cluster vérifie lesdites conditions, une opération de fusion du cluster ou de départ d'un sous-ensemble de nœud du cluster pour un autre cluster existant est évaluée par le nœud chef du cluster en fonction desdites informations actualisées, puis déclenchée le cas échéant ;
- à l'issue du cycle de fonctionnement, la formule d'une métrique en fonction des informations actualisées utilisée à l'étape iii pour sélectionner une configuration et dont le calcul à un cycle donné est fonction d'une valeur calculée au cycle précédent est modifiée par le remplacement de ladite valeur par une autre valeur.

Suivant un deuxième aspect, l'invention décrit un programme d'ordinateur destiné à être installé dans la mémoire d'un nœud mobile d'un réseau de communication ad hoc sans fil et à être exécuté sur un microprocesseur du nœud, ledit programme d'ordinateur comprenant des instructions logicielles qui, lorsqu'elles sont exécutées sur le microprocesseur, mettent en œuvre les étapes, qui incombent audit nœud, d'un procédé selon le premier aspect de l'invention.

Suivant un troisième aspect, l'invention décrit un nœud mobile d'un réseau de communication sans fil ad hoc de nœuds mobiles dans lequel un ou des cluster comprenant des nœuds, y compris un nœud désigné chef de cluster, partageant au moins un canal logique commun affecté au cluster, ledit nœud étant caractérisé en ce que :
i/ le nœud est adapté, s'il fait partie d'un cluster, pour déclencher d'une étape de découverte de voisinage déterminant des informations actualisées comprenant l'identification de nœud(s) voisins et le calcul d'indices de qualité des liens radio entre lesdits nœuds voisins et ledit nœud et pour envoyer ces informations actualisées au nœud chef de cluster ;
ii/ s'il est chef de cluster, le nœud est adapté pour collecter les informations actualisées par les nœuds dudit cluster et actualiser des métriques de configuration en fonction desdites informations ;
iii/ s'il est chef de cluster : le nœud est adapté pour sélectionner une configuration de cluster en fonction des métriques de configuration actualisées, la sélection de la configuration comprenant au moins la sélection du canal logique associé au cluster et, si la configuration sélectionnée est différente de la configuration courante du cluster, et le nœud est adapté pour déclencher, auprès de chaque nœud du cluster, l'implémentation de la nouvelle configuration sélectionnée ; puis
iv/ s'il est chef de cluster : le nœud est adapté alors pour vérifier si un ensemble de conditions relatives à la configuration mise en œuvre dans le cluster est bien vérifié, ledit ensemble de conditions déterminant si la stabilité de la configuration mise en œuvre dans le cluster est supérieure à un seuil fixé ; et si et seulement si l'ensemble de conditions est vérifié, le nœud est adapté pour déclencher une évaluation du cluster en fonction des informations actualisées à l'opération i/ et dans le cas où il détermine, au cours de ladite évaluation, qu'une action de fusion du cluster avec un autre cluster ou de division du cluster ou de départ d'un ou plusieurs nœuds du cluster vers un autre cluster est à réaliser, pour déclencher ladite action auprès des nœuds du cluster ;
le nœud, s'il fait partie d'un cluster, est adapté pour itérer les opérations i à iv, qu'une nouvelle configuration ait été implémentée ou non, qu'une action de fusion ou de division ou de départ ait été implémentée ou non.

Dans des modes de réalisation, un tel nœud comprendra en outre l'une au moins des caractéristiques suivantes :
- ledit ensemble de conditions relatives à la configuration comporte une ou plusieurs conditions parmi :
   aucun déclenchement de nouvelle configuration n'a été déclenchée à l'étape iii du cycle courant ;
   un temps supérieur à un seuil minimum prédéfini s'est écoulé depuis le dernier changement de configuration ;
   la configuration actuelle est mise en œuvre depuis les derniers θ_{stab} cycles, où θ_{stab} est une valeur entière prédéfinie ;
- le nœud est adapté pour, lors de la sélection de configuration de cluster, effectuer une opération de désignation d'un nouveau chef de cluster parmi les nœuds du cluster en fonction desdites informations actualisées et pour transmettre aux nœuds du cluster, au sein d'un même message, le nouveau canal logique sélectionné et l'indication du nouveau chef de cluster désigné.

Suivant un quatrième aspect, l'invention décrit un réseau de communication sans fil ad hoc de nœuds mobiles, comportant une pluralité de nœuds mobiles selon le troisième aspect de l'invention.

### Brève description des figures :

L'invention sera mieux comprise et d'autres caractéristiques, détails et avantages apparaîtront mieux à la lecture de la description qui suit, donnée à titre non limitatif, et grâce aux figures annexées, données à titre d'exemple.
La figure 1 représente un réseau de communication sans fil de nœuds ad hoc dans un mode de réalisation de l'invention ;
La figure 2 représente les étapes d'un procédé de configuration et clusterisation dans le réseau de la figure 1 dans un mode de réalisation de l'invention ;

Des références identiques peuvent être utilisées dans des figures différentes lorsqu'elles désignent des éléments identiques ou comparables.

### Description détaillée :

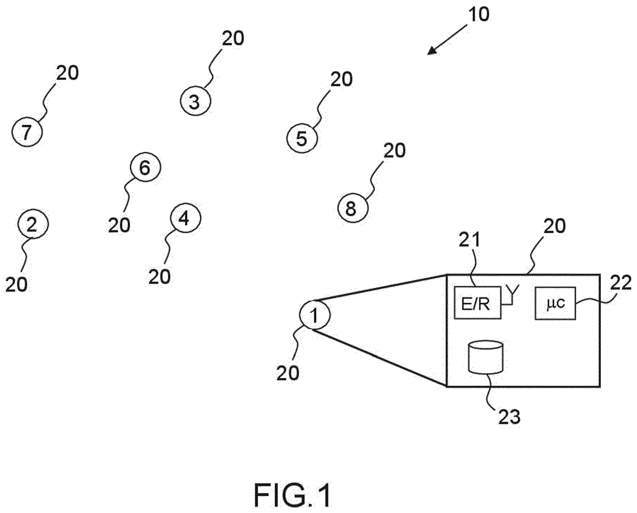

Considérons, en référence à la figure 1, un réseau 10 de communication ad hoc sans fil comportant N nœuds 20 avec ici N=8. Un tel réseau ad hoc est sans infrastructure fixe Les nœuds 20 ou au moins certains d'entre eux peuvent être mobiles et se déplacer de façon autonome les uns par rapport aux autres. Le réseau 10 comporte un ou plusieurs clusters dont le nombre et la composition évoluent dynamiquement via la mise en œuvre dans les nœuds d'un algorithme de clusterisation de l'art antérieur, et la configuration de chaque cluster est sélectionnée parmi plusieurs configurations possibles via la mise en œuvre d'un algorithme de sélection de configuration dans les nœuds conformément à l'art antérieur, l'ensemble étant mise en œuvre de la manière décrite ci-dessous.

Chaque nœud 20, par exemple un téléphone cellulaire, un ordinateur portable, comprend, comme représenté plus en détail sur la figure 1 pour l'un des nœuds, un émetteur-récepteur radiofréquence 21, un microcalculateur 22 et une mémoire 23. La mémoire 23 stocke les algorithmes conjoints de clusterisation et de sélection de configuration. Chaque nœud d'un cluster est adapté pour échanger des données avec les autres nœuds du cluster sur un canal logique partagé entre eux et attribué par configuration, pour mettre en œuvre des fonctions prédéfinies de clusterisation et de configuration conjoints.

Chaque nœud est adapté pour périodiquement, outre la détermination de son état interne :
- analyser la bande spectrale et calculer des métriques de qualité de canaux pour tous les canaux présents ;
- déterminer ses nœuds voisins (découverte de voisinage) et des informations relatives à chaque nœud voisin telles qu'un indice de la qualité du lien entre eux, leur voisinage à eux, leur cluster.

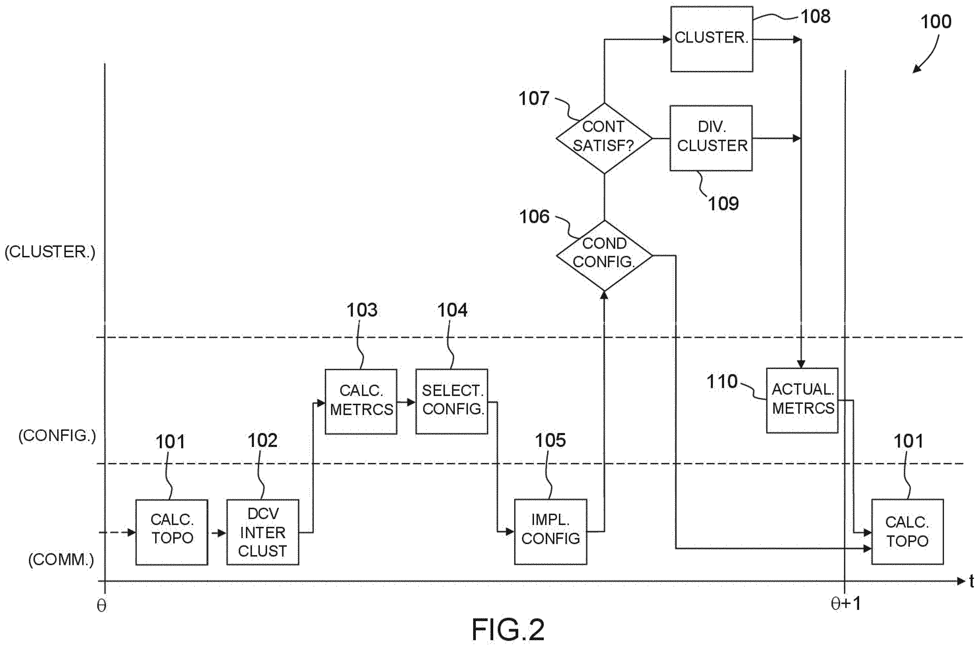

Dans un mode de réalisation, les nœuds 20 du réseau sont adaptés pour mettre en œuvre cycliquement un processus 100 représenté schématiquement en figure 2. Dans un mode de réalisation, chaque nœud 20 comporte en outre dans sa mémoire 23 des instructions logicielles, qui, lorsqu'elles sont exécutées sur le microcalculateur 22 du nœud 20, mettre en œuvre les étapes, qui lui incombent, du procédé 100.

En référence à la figure 2, le procédé selon l'invention comporte trois secteurs d'actions : un secteur commun aux aspects de configuration et clusterisation, un secteur propre à la configuration et un secteur propre à la clusterisation.

Décrivons une itération θ du cycle de fonctionnement proposé selon le procédé 100.

Le réseau, au départ de cette itération, est dans un état donné, en termes de clusters formés et de configurations des clusters.

Les nœuds 20 du réseau sont contraints, selon l'invention, de répéter ce cycle itérativement. Considérons un nœud 20 quelconque, faisant partie d'un cluster ; un nœud dudit cluster a été précédemment élu comme chef de cluster. Le chef de cluster gère par exemple l'adressage du cluster et la distribution du trafic de contrôle dans le cluster. On notera qu'à l'initialisation d'un nœud, il est fréquent d'imposer au nœud de chercher un cluster à rejoindre, quitte à se constituer chef de son propre cluster.

Le procédé cyclique selon l'invention comporte trois phases successives ordonnées ainsi : *i*) une phase de diffusion d'information, *ii*) une phase de sélection de configuration en fonction des informations obtenues lors de la phase de diffusion d'information, et enfin *iii*) une phase de regroupement des nœuds au sein de clusters en fonction des informations obtenues lors de la phase de diffusion d'information.

Dans la première phase (celle de diffusion d'information), une requête d'information est déclenchée, en interrogeant un ou plusieurs nœuds ou liens et en demandant à ces derniers d'évaluer un indice de qualité de communication pour un nœud ou un lien entre deux nœuds d'un cluster, et/ou d'évaluer un indice de qualité de communication pour des liens entre des nœuds de différents clusters.

Dans un mode de réalisation, cette première phase est par exemple mise en œuvre à l'aide des étapes 101, 102 et elle est déclenchée par le chef de cluster.
Dans l'étape 101, un nœud 20, suite à la réception de la requête, calcule la topologie locale courante du cluster auquel le nœud 20 appartient au début du cycle θ considéré, en échangeant avec ses voisins géographiques dans le même cluster, afin d'identifier quels nœuds sont présents dans le cluster ; il détermine des données permettant l'évaluation de la qualité des liens identifiés de communication du cluster. De façon générale, l'évaluation de la qualité des liens est effectuée à l'aide d'un ou plusieurs éléments parmi : bande passante, charge, délai, le voisinage à n bonds, taux de perte, puissance des signaux reçus, SNR, SINR et/ou BER... ou un indice de qualité obtenu en fonction de l'un ou de plusieurs de ces éléments. Suivant les modes de réalisation il sera déterminé en outre l'un ou l'autre de ces éléments : les liens entre ces nœuds, le nombre de bonds par liens (ces données seront utilisées pour établir les tables de routage), les poids associés aux nœuds identifiés...
Dans l'étape 102, le nœud 20 réalise les tâches de découverte de voisinage inter-cluster, permettant d'identifier la liste des nœuds (et/ou des nœuds chefs de cluster) des clusters voisins, avec l'identifiant de leur cluster et leur poids, ainsi que des indices de la qualité des liens de communication associés telle que définie ci-dessus, ces indices étant issus notamment de mesures ou d'échanges réalisés par les nœuds. Suivant les modes de réalisation, cette étape est réalisée uniquement par les nœuds 20 qui sont chefs de cluster ou alors par tout nœud 20 ou un sous-ensemble des nœuds 20 appartenant au cluster
Ces étapes 101, 102 font partie du secteur dit commun mentionné plus haut. Elles correspondent à la diffusion, entre les nœuds et jusqu'au nœud chef de cluster, de l'information sur la topologie, y compris l'évaluation de la qualité des liens de communication du cluster. Elles sont par exemple mises en œuvre par le biais de protocoles connus de découverte de voisinage, comportant par exemple l'échange de messages de type « hello » indiquant les identifiants de nœuds, de clusters, les poids des nœuds, le nombre de nœuds dans le cluster tel que connu du nœud envoyant le message « hello ».

A titre d'exemple, il est considéré ici qu'un poids est affecté à chaque nœud, mis à jour dynamiquement en fonction de l'un de ces critères de performances relatif audit nœud ou d'une combinaison de critères : proximité du centre géographique du cluster, stabilité, degré de mobilité évalué sur l'historique de puissance des niveaux reçus ou des coordonnées géographiques par exemple, énergie restante, capacité, puissance de transmission. Ces critères correspondent à des métriques à calculer.

Ensuite dans la phase de configuration de cluster, le nœud chef de cluster, dans chaque cluster, déclenche une opération de sélection de configuration pour le cluster en fonction de l'information reçue dans la première phase, notamment en fonction de la comparaison des indices de qualités reçus et de contraintes données pour le cluster (par exemple seuils de qualité de service minimum, par exemple débit minimum, latence maximum). Cette opération est mise en œuvre par l'exécution de l'algorithme de configuration stocké dans sa mémoire 23.

Par exemple, dans un mode de réalisation, la phase de configuration comprend les étapes 103, 104.
Dans l'étape 103, le nœud 20 chef de cluster calcule des métriques actualisées à partir de l'information actualisée reçue dans la première phase, par exemple une métrique indiquant si chaque nœud du cluster est bien connecté à au moins un autre nœud du cluster, une métrique associée à l'élection du nouveau chef de cluster), une métrique nommée « utilité » indiquant le rapport du nombre de liens actifs par le nombre de liens maximum (c.-à-d. si tous les nœuds du cluster étaient connectés directement à tous les autres nœuds du cluster), une métrique de débit du cluster.
Dans l'étape 104, le nœud 20 chef de cluster sélectionne la configuration du cluster en fonction des métriques calculées à l'étape 103. Si la configuration actuellement en œuvre dans le cluster est celle sélectionnée, alors l'étape 106 est directement mise en œuvre.
Si la configuration nouvellement sélectionnée diffère de la configuration actuellement mise en œuvre dans le cluster, elle est transmise par le chef de cluster aux nœuds de ce cluster (par exemple, elle comprend la liste des canaux logiques ou le choix du chef de cluster), et l'étape 105 est alors mise en œuvre.
Cette configuration, quand distincte de la configuration jusqu'alors en œuvre dans le cluster, fixe par exemple pour le cluster un ou des canaux logiques distincts de ceux précédemment configurés. Elle comprend par exemple en outre le choix d'un nouveau chef de cluster, qui s'avère « meilleur » que l'actuel (en fonction de critère(s) de sélection de chef de cluster, par exemple correspondant au plus fort poids). Dans des modes de réalisation, d'autres paramètres de configuration sont sélectionnés parmi : la puissance d'émission des nœuds du cluster, le procédé de codage, la modulation, etc.
Dans un mode de réalisation, la nouvelle configuration du cluster et l'indication du nouveau chef de cluster est transmise au sein d'un même message aux autres nœuds du cluster par le chef de cluster courant.
Ces étapes 103, 104 font partie du secteur de configuration mentionné plus haut.

Dans une étape 105, relevant du secteur commun, la configuration nouvellement sélectionnée pour le cluster est alors mise en œuvre au sein du cluster, par chaque nœud 20 dans le cluster.

Dans la phase de regroupement des nœuds, le regroupement des nœuds en cluster est réactualisé, ce qui peut conduire à la sortie ou à l'entrée de nœuds dans un cluster existant, à la dissolution de clusters existants ou à la création de nouveaux clusters en fonction de la vérification d'un ensemble de contraintes a priori de fonctionnement par les données de topologie et des indices de qualité obtenues lors de la phase de diffusion.

Par exemple, dans un mode de réalisation, la phase de clusterisation comprend les étapes 106 à 109.

Dans une étape 106 le chef de cluster vérifie si un ensemble de conditions est satisfait.

Ces conditions sont par exemple une parmi (ou une combinaison de certaines) parmi les suivantes :
- aucun changement de configuration n'a été déclenché à l'étape 104 du cycle θ ;
- un temps supérieur à un seuil minimum prédéfini s'est écoulé depuis le dernier changement de configuration ;
- la configuration actuelle est mise en œuvre depuis les derniers θ_{stab} cycles, où θ_{stab} est une valeur entière prédéfinie.
L'étape 106 a pour but de laisser le réseau se stabiliser avant de déclencher une opération de clusterisation. Cela permet d'éviter, tant qu'il n'a pas été vérifié que la nouvelle configuration est meilleure ou tant que la nouvelle configuration n'est pas installée de manière stable, de provoquer un changement de clusterisation sur cette base.

Si la condition de l'étape 106 est remplie, alors dans une étape 107, le chef de cluster vérifie si un ensemble de contraintes est satisfait ; ces contraintes si elles ne sont pas remplies, donnent lieu à division du cluster.

Cet ensemble de contraintes comprend par exemple une ou plusieurs des conditions suivantes et la vérification prend en compte les informations obtenues aux étapes 101, 102 ou des métriques calculées en fonction de ces informations :
- contraintes sur la topologie courante du cluster : le nombre de nœuds actualisé suite aux étapes 101, 102 est inférieur à un nombre maximum prédéfini de nœuds associé au cluster ;
- le diamètre du cluster ;
- la distance au chef de cluster ;
- la connectivité du cluster ;
- un niveau de qualité de service requis.

Si une contrainte de l'étape 107 n'est pas remplie, alors une opération de division de cluster est évaluée, puis déclenchée dans l'étape 109 par le nœud 20 chef de cluster, de manière connue, auprès des nœuds impactés, si les conditions de division de cluster sont réunies. Le déclenchement est effectué suivant les cas par le nœud chef de cluster ou par un autre nœud, par exemple si on détecte une panne du chef de cluster ou son absence du cluster. Puis l'étape 110 est mise en œuvre.

Si les contraintes de l'étape 107 sont remplies, alors les fonctions relatives à l'évaluation de cluster elle-même sont déclenchées à l'étape 108 par le nœud 20 chef de cluster, conduisant par exemple à une fusion avec un cluster voisin.

Dans le cas présent, l'évaluation de cluster à l'étape 108 est mise en œuvre par un algorithme de clusterisation, qui a pour fonction de déterminer un regroupement dynamique et distribué des nœuds et qui est fonction de l'un et/ou l'autre de ces paramètres : la localisation des nœuds, leur énergie résiduelle, leur mobilité de la qualité de communication courante, la topologie, le spectre fréquentiel, la qualité de service souhaitée (en termes notamment de débit, de délai, de gigue, taux de perte, de sécurité), la taille (en nombre de nœuds et/ en fonction de la distance entre nœuds) maximum et/ou minimum fixée de cluster. La clusterisation comprend l'identification des nœuds à regrouper entre eux et l'identification des nœuds spécifiques tels que nœuds passerelles offrant les liens de communication vers les clusters voisins.

L'étape 108 résulte par exemple en le déclenchement de la fusion de deux clusters voisins par le chef de cluster auprès des nœuds concernés, ou encore du départ d'un sous-ensemble de nœud du cluster pour un autre cluster existant.
Puis l'étape 110 est mise en œuvre.

Si la condition de l'étape 106 n'est pas remplie, alors on empêche tout déclenchement de l'algorithme de clusterisation sur le cluster considéré et l'étape 101du cycle suivant (cycle θ+1) sera la prochaine étape mise en œuvre.

Dans l'étape 110, mises en œuvre à la suite des étapes 108 et 109, certaines des métriques sont mises à jour par les nœuds 20, afin qu'elles ne soient pas faussées par le changement de clusterisation.

Par exemple, considérons une métrique qui mesure l'évolution de l'utilité du cluster (ratio du nombre de liens/nombre de liens maximum). Un changement de cluster s'accompagnant, relativement au cluster précédent, d'une augmentation du nombre de liens maximum ou d'une baisse du nombre de liens liées à un changement de cluster (par exemple la fusion d'un cluster de 10 nœuds tous connectés entre eux - utilité égale à 1 - avec un cluster d'un seul nœud qui n'est relié au cluster précédent que par un nœud donne lieu à un nouveau cluster d'utilité (égale à 91/110) inférieure à 1) donnerait lieu à la transition à une baisse de la métrique mesurant l'évolution, ce qui pourrait donner lieu à un déclenchement de changement de configuration ; or la baisse de la métrique dans un tel moment ne refléterait pas une baisse de la qualité de la configuration, mais simplement un changement de clusterisation.
Ainsi dans un mode de réalisation, dans l'étape 110, la formule d'une (ou plusieurs) métrique utilisée à l'étape 103 pour décider de déclencher ou non un changement de configuration et dont le calcul à un cycle donné est fonction d'une valeur calculée au cycle précédent est modifiée par le remplacement de ladite valeur par une autre valeur.
Par exemple, la valeur relative à l'utilité du cluster considéré avant le changement de cluster au cycle θ est remplacée, à l'issue du cycle θ par la valeur d'utilité du nouveau cluster. Ceci permet d'éviter que la configuration ne soit, au prochain cycle, considérée comme mauvaise due à une métrique d'évolution d'utilité négative, donnant lieu à un nouveau changement de configuration, qui, si elle est considérée comme mauvaise, donnerait lieu à une division de cluster etc. donnant lieu à une situation instable.

Puis le cycle est itéré, qu'une nouvelle configuration ait été implémentée ou non, qu'une action de fusion ou de division ou de départ de nœud(s) du cluster vers un autre cluster existant, ait été implémentée ou non.

L'invention définit ainsi un cycle de fonctionnement qui régit également l'impact du regroupement de nœuds sur la configuration de cet ensemble et inversement.

Dans un mode de réalisation, le cycle est mis en œuvre parallèlement au trafic utile (par exemple, sur 10 paquets consécutifs, n (n est une valeur qui peut être adaptée en fonction des résultats visés, par exemple n=2) seront octroyés à la mise en œuvre du cycle, 8 aux données utiles).

La mutualisation de la signalisation qui permet par exemple de mutualiser les informations collectées aux étapes 101, 102 et le rôle de chef de cluster, présent pour la configuration, et de l'utiliser pour le regroupement de nœuds.

L'invention met en place, dans un mode de réalisation, de nouveaux indices de qualité pour la configuration, prenant en compte la dynamique du regroupement des nœuds au sein d'un cluster (étapes 103 et 110).

L'approche proposée définit ainsi un cycle permettant de faire fonctionner les deux fonctionnalités de façon séquentielle avec, dans un mode de réalisation, une priorisation de la configuration qui peut bloquer des opérations de regroupements de nœuds. Elle introduit également de nouvelles métriques et des fonctions d'utilité, prenant en compte la dynamique du regroupement des nœuds vis-à-vis de la configuration. La solution mutualise la signalisation, qui permet notamment de mutualiser le rôle de chef de cluster pendant la configuration et de l'utiliser pour le regroupement de nœuds.

La solution décrite en référence aux figures est :
- distribuée : elle n'a pas besoin d'une entité centrale gérant toutes les informations ;
- dynamique : elle permet de s'adapter à des changements, comme par exemple de topologie ;
- complète : elle traite tous les aspects de la problématique, dont sa mise en œuvre et la signalisation nécessaire.

## Revendications

1. Procédé de mise en œuvre dynamique de clusterisation de nœuds et de sélection de configuration de cluster conjointes au sein d'un réseau de communication sans fil ad hoc (10) de nœuds mobiles (20), un cluster comprenant des nœuds, y compris un nœud désigné chef de cluster, partageant au moins un canal logique commun affecté au cluster, ledit procédé étant **caractérisé en ce que** :
chaque nœud (20) d'un cluster est contraint d'itérer le cycle de fonctionnement comprenant les étapes suivantes :
i/ déclenchement d'une étape de découverte de voisinage déterminant des informations actualisées comprenant l'identification de nœud(s) voisins et le calcul d'indices de qualité des liens radio entre lesdits nœuds voisins et ledit nœud (20) ;
ii/ collecte par le nœud chef de cluster desdites informations actualisées par les nœuds dudit cluster et actualisation de métriques de configuration en fonction desdites informations ;
iii/ sélection d'une configuration de cluster par le nœud chef de cluster en fonction des métriques de configuration actualisées, la sélection de la configuration comprenant au moins la sélection du canal logique associé au cluster et, si la configuration sélectionnée est différente de la configuration courante du cluster, déclenchement, par le nœud chef de cluster auprès de chaque nœud du cluster, de l'implémentation de la nouvelle configuration sélectionnée ; puis
iv/ vérification qu'un ensemble de conditions relatives à la configuration mise en œuvre dans le cluster est bien vérifié, ledit ensemble de conditions déterminant si la stabilité de la configuration mise en œuvre dans le cluster est supérieure à un seuil fixé ; et si et seulement si l'ensemble de conditions est vérifié, déclenchement d'une évaluation du cluster par le nœud chef de cluster en fonction des informations actualisées à l'étape i/ et dans le cas où ladite étape d'évaluation détermine qu'une action de fusion du cluster avec un autre cluster ou de division du cluster ou de départ d'un ou plusieurs nœuds du cluster vers un autre cluster est à réaliser, mise en œuvre de ladite action suite au déclenchement auprès des nœuds du cluster, de ladite action ; si l'ensemble de conditions n'est pas vérifié, l'étape v est directement mise en œuvre ;
v/ itération des étapes i à iv, qu'une nouvelle configuration ait été implémentée ou non, qu'une action de fusion ou de division ou de départ ait été implémentée ou non.

2. Procédé de mise en œuvre dynamique de clusterisation de nœuds et de sélection de configuration de cluster conjointes selon la revendication 1, selon lequel ledit ensemble de conditions relatives à la configuration comporte une ou plusieurs conditions parmi :
- aucun déclenchement de nouvelle configuration n'a été déclenchée à l'étape iii du cycle courant ;
- un temps supérieur à un seuil minimum prédéfini s'est écoulé depuis le dernier changement de configuration ;
- la configuration actuelle est mise en œuvre depuis les derniers θ_{stab} cycles, où θ_{stab} est une valeur entière prédéfinie.

3. Procédé de mise en œuvre dynamique de clusterisation de nœuds et de sélection de configuration de cluster conjointes selon l'une des revendications précédentes, selon lequel, dans l'étape de configuration de cluster, le nœud chef de cluster effectue une opération de désignation d'un nouveau chef de cluster parmi les nœuds du cluster en fonction desdites informations actualisées et le nœud chef de cluster transmet aux nœuds du cluster, au sein d'un même message, le nouveau canal logique sélectionné et l'indication du nouveau chef de cluster désigné.

4. Procédé de mise en œuvre dynamique de clusterisation de nœuds et de sélection de configuration de cluster conjointes selon l'une des revendications précédentes, selon lequel, dans l'étape d'évaluation du cluster :
- il est préalablement déterminé par le nœud chef de cluster, en fonction desdites informations actualisées, si le cluster vérifie un ensemble de conditions définissant les caractéristiques requises d'un cluster, et s'il est déterminé que le cluster ne vérifie pas lesdites conditions, une division de cluster est évaluée par le nœud chef du cluster, puis déclenchée le cas échéant ;
- s'il est déterminé que le cluster vérifie lesdites conditions, une opération de fusion du cluster ou de départ d'un sous-ensemble de nœud du cluster pour un autre cluster existant est évalué par le nœud chef du cluster en fonction desdites informations actualisées, puis déclenchée le cas échéant .

5. Procédé de mise en œuvre dynamique de clusterisation de nœuds et de sélection de configuration de cluster selon l'une des revendications précédentes, selon lequel, à l'issue du cycle de fonctionnement, la formule d'une métrique en fonction des informations actualisées utilisée à l'étape iii pour sélectionner une configuration et dont le calcul à un cycle donné est fonction d'une valeur calculée au cycle précédent est modifiée par le remplacement de ladite valeur par une autre valeur.

6. Programme produit d'ordinateur destiné à être installé dans la mémoire d'un nœud mobile (20) d'un réseau (10) de communication sans fil ad hoc et à être exécuté sur un microprocesseur du nœud, ledit programme d'ordinateur comprenant des instructions logicielles qui, lorsqu'elles sont exécutées sur le microprocesseur, mettent en œuvre les étapes, qui incombent audit nœud, d'un procédé selon l'une des revendications 1 à 5.

7. Nœud mobile (20) d'un réseau (10) de communication sans fil ad hoc de nœuds mobiles dans lequel un ou des clusters comprenant des nœuds, y compris un nœud désigné chef de cluster, partageant au moins un canal logique commun affecté au cluster, ledit nœud étant **caractérisé en ce que** :
i/ le nœud (20) est adapté, s'il fait partie d'un cluster, pour déclencher d'une étape de découverte de voisinage déterminant des informations actualisées comprenant l'identification de nœud(s) voisins et le calcul d'indices de qualité des liens radio entre lesdits nœuds voisins et ledit nœud et pour envoyer ces informations actualisées au nœud chef de cluster;
ii/ s'il est chef de cluster, le nœud (20) est adapté pour collecter les informations actualisées par les nœuds dudit cluster et actualiser des métriques de configuration en fonction desdites informations ;
iii/ s'il est chef de cluster : le nœud (20) est adapté pour sélectionner une configuration de cluster en fonction des métriques de configuration actualisées, la sélection de la configuration comprenant au moins la sélection du canal logique associé au cluster et, si la configuration sélectionnée est différente de la configuration courante du cluster, et le nœud est adapté pour déclencher, auprès de chaque nœud du cluster, l'implémentation de la nouvelle configuration sélectionnée ; puis
iv/ s'il est chef de cluster : le nœud (20) est adapté alors pour vérifier si un ensemble de conditions relatives à la configuration mise en œuvre dans le cluster est bien vérifié, ledit ensemble de conditions déterminant si la stabilité de la configuration mise en œuvre dans le cluster est supérieure à un seuil fixé ; et si et seulement si l'ensemble de conditions est vérifié, le nœud est adapté pour déclencher une évaluation du cluster en fonction des informations actualisées à l'opération i/ et dans le cas où il détermine, au cours de ladite évaluation, qu'une action de fusion du cluster avec un autre cluster ou de division du cluster ou de départ d'un ou plusieurs nœuds du cluster vers un autre cluster est à réaliser, pour déclencher ladite action auprès des nœuds du cluster ;
le nœud (20), s'il fait partie d'un cluster, est adapté pour itérer les opérations i à iv, qu'une nouvelle configuration ait été implémentée ou non, qu'une action de fusion ou de division ou de départ ait été implémentée ou non.

8. Nœud (20) selon la revendication 7, dans lequel ledit ensemble de conditions relatives à la configuration comporte une ou plusieurs conditions relatives à la configuration parmi :
- aucun déclenchement de nouvelle configuration n'a été déclenchée à l'étape iii du cycle courant ;
- un temps supérieur à un seuil minimum prédéfini s'est écoulé depuis le dernier changement de configuration ;
- la configuration actuelle est mise en œuvre depuis les derniers θ_{stab} cycles, où θ_{stab} est une valeur entière prédéfinie.

9. Nœud (20) selon l'une des revendications 7 à 8, adapté pour, lors de la sélection de configuration de cluster, effectuer une opération de désignation d'un nouveau chef de cluster parmi les nœuds du cluster en fonction desdites informations actualisées et pour transmettre aux nœuds du cluster, au sein d'un même message, le nouveau canal logique sélectionné et l'indication du nouveau chef de cluster désigné.

10. Réseau (10) de communication sans fil ad hoc de nœuds mobiles, comportant une pluralité de nœuds mobiles (20) selon l'une des revendications 7 à 9.

## Patentansprüche

1. Verfahren zur dynamischen und gemeinsamen Implementierung von Clustern von Knoten und Auswahl einer Cluster-Konfiguration innerhalb eines drahtlosen Ad-hoc-Kommunikationsnetzes (10) mobiler Knoten (20), wobei ein Cluster Knoten, inklusive einem als Cluster-Hauptknoten bezeichneten, umfasst, der mindestens einen gemeinsamen dem Cluster zugewiesenen logischen Kanal teilt, wobei das Verfahren **dadurch gekennzeichnet ist, dass**:
jeder Knoten (20) eines Clusters gezwungen ist, den Betriebszyklus zu wiederholen, die folgenden Schritte umfassend:
i/ Auslösen eines Schrittes zur Umgebungsermittlung, der aktualisierte Informationen bestimmt, welche die Identifizierung von Umgebungsknoten und die Berechnung von Qualitätsindizes der Funkverbindungen zwischen den Umgebungsknoten und dem Knoten (20) umfassen;
ii/ Sammeln durch den Cluster-Hauptknoten der aktualisierten Informationen durch die Knoten des Clusters und Aktualisieren von Konfigurationsmetriken in Abhängigkeit von den Informationen;
iii/ Auswählen einer Cluster-Konfiguration durch den Cluster-Hauptknoten in Abhängigkeit von den aktualisierten Konfigurationsmetriken, wobei die Auswahl der Konfiguration mindestens die Auswahl des dem Cluster zugeordneten logischen Kanals und, wenn sich die ausgewählte Konfiguration von der laufenden Konfiguration des Clusters unterscheidet, Auslösen, durch den Cluster-Hauptknoten bei jedem Knoten des Clusters, der Umsetzung der ausgewählten neuen Konfiguration; danach
iv/ Überprüfen, dass ein Satz an Bedingungen in Bezug auf die im Cluster implementierte Konfiguration ordnungsgemäß geprüft ist, wobei der Satz an Bedingungen bestimmt, ob die Stabilität der im Cluster implementierten Konfiguration über einer festen Schwelle liegt; und wenn, und nur wenn der Satz an Bedingungen geprüft ist, Auslösen einer Bewertung des Clusters durch den Cluster-Hauptknoten in Abhängigkeit von den im Schritt i/ aktualisierten Informationen und für den Fall, dass der Bewertungsschritt bestimmt, dass eine Aktion zum Fusionieren des Clusters mit einem anderen Cluster oder Unterteilen des Clusters oder Abgehen eines oder mehrerer Knoten des Clusters zu einem anderen Cluster durchzuführen ist, Implementieren der Aktion infolge der Auslösung bei den Knoten des Clusters der Aktion; wenn der Satz an Bedingungen nicht geprüft ist, wird der Schritt v direkt implementiert;
v/ Wiederholen der Schritte i bis iv, egal ob eine neue Konfiguration umgesetzt worden ist oder nicht, eine Aktion zum Fusionieren oder Unterteilen oder Abgehen umgesetzt worden ist oder nicht.

2. Verfahren zur dynamischen und gemeinsamen Implementierung von Clustern von Knoten und Auswahl einer Cluster-Konfiguration nach Anspruch 1, wobei der Satz an Bedingungen in Bezug auf die Konfiguration eine oder mehrere Bedingungen beinhaltet, aus:
- keine Auslösung einer neuen Konfiguration ist im Schritt iii des laufenden Zyklus ausgelöst worden;
- eine Zeit länger als eine vordefinierte Mindestschwelle ist seit der letzten Konfigurationsänderung abgelaufen;
- die aktuelle Konfiguration seit den letzten θ_{stab} Zyklen wird implementiert, wobei θ_{stab} ein vordefinierter ganzzahliger Wert ist.

3. Verfahren zur dynamischen und gemeinsamen Implementierung von Clustern von Knoten und Auswahl einer Cluster-Konfiguration nach einem der vorstehenden Ansprüche, wobei im Schritt zur Cluster-Konfiguration der Cluster-Hauptknoten einen Vorgang zur Benennung eines neuen Cluster-Hauptknotens aus den Knoten des Clusters in Abhängigkeit von den aktualisierten Informationen durchführt, und der Cluster-Hauptknoten innerhalb einer gleichen Nachricht, den neuen ausgewählten logischen Kanal und die Angabe des benannten neuen Cluster-Hauptknotens an die Knoten des Clusters sendet.

4. Verfahren zur dynamischen und gemeinsamen Implementierung von Clustern von Knoten und Auswahl einer Cluster-Konfiguration nach einem der vorstehenden Ansprüche, wobei im Bewertungsschritt des Clusters:
- vom Cluster-Hauptknoten in Abhängigkeit von den aktualisierten Informationen vorab bestimmt wird, ob der Cluster einen Satz an Bedingungen prüft, welche die nötigen Eigenschaften eines Clusters definieren, und wenn bestimmt wird, dass der Cluster die Bedingungen nicht prüft, vom Cluster-Hauptknoten eine Cluster-Unterteilung bewertet, und danach soweit erforderlich ausgelöst wird;
- wenn bestimmt wird, dass der Cluster die Bedingungen überprüft, ein Vorgang zum Fusionieren des Clusters oder Abgehen eines Knoten-Teilsatzes des Clusters zu einem anderen bestehenden Cluster vom Cluster-Hauptknoten in Abhängigkeit von den aktualisierten Informationen bewertet wird, und danach soweit erforderlich ausgelöst wird.

5. Verfahren zur dynamischen und gemeinsamen Implementierung von Clustern von Knoten und Auswahl einer Cluster-Konfiguration nach einem der vorstehenden Ansprüche, wobei am Ende des Betriebszyklus die Formel einer Metrik in Abhängigkeit von den aktualisierten Informationen, die im Schritt iii verwendet wird, um eine Konfiguration auszuwählen, und deren Berechnung in einem gegebenen Zyklus von einem im vorstehenden Zyklus berechneten Wert abhängig ist, durch das Ersetzen des Wertes durch einen anderen Wert verändert wird.

6. Computerprogrammprodukt, das dazu bestimmt ist, im Speicher eines mobilen Knotens (20) eines drahtlosen Ad-hoc-Kommunikationsnetzes (10) installiert zu werden, und in einem Mikroprozessor des Knotens ausgeführt zu werden, wobei das Computerprogramm Software-Anweisungen umfasst, die, wenn sie im Mikroprozessor ausgeführt werden, die Schritte umsetzen, die den Knoten veranlassen, ein Verfahren nach einem der Ansprüche 1 bis 5 durchzuführen.

7. Mobiler Knoten (20) eines Ad-hoc-Kommunikationsnetzes mobiler Knoten, wobei (ein) Cluster Knoten, inklusive einem als Cluster-Hauptknoten bezeichneten, umfasst, der mindestens einen gemeinsamen dem Cluster zugewiesenen logischen Kanal teilt, wobei der Knoten **dadurch gekennzeichnet ist, dass**:
i/ der Knoten (20) angepasst ist, wenn er Teil eines Clusters ist, um einen Schritt zur Umgebungsermittlung auszulösen, der aktualisierte Informationen bestimmt, welche die Identifizierung von Umgebungsknoten und die Berechnung von Qualitätsindizes der Funkverbindungen zwischen den Umgebungsknoten und dem Knoten umfassen, und um diese aktualisierten Informationen an den Cluster-Hauptknoten zu schicken;
ii/ wenn er Cluster-Hauptknoten ist, der Knoten (20) angepasst ist, um die aktualisierten Informationen durch die Knoten des Clusters zu sammeln, und Konfigurationsmetriken in Abhängigkeit von den Informationen zu aktualisieren;
iii/ wenn er Cluster-Hauptknoten ist; der Knoten (20) angepasst ist, um eine Cluster-Konfiguration in Abhängigkeit von den aktualisierten Konfigurationsmetriken auszuwählen, wobei die Auswahl der Konfiguration mindestens die Auswahl des dem Cluster zugeordneten logischen Kanals und, wenn sich die ausgewählte Konfiguration von der laufenden Konfiguration des Clusters unterscheidet, und der Knoten angepasst ist, um bei jedem Knoten des Clusters die Umsetzung der ausgewählten neuen Konfiguration auszulösen; danach
iv/ wenn er Cluster-Hauptknoten ist: der Knoten (20) angepasst ist, um zu prüfen, ob ein Satz an Bedingungen in Bezug auf die im Cluster implementierte Konfiguration ordnungsgemäß geprüft ist, wobei der Satz an Bedingungen bestimmt, ob die Stabilität der im Cluster implementierten Konfiguration über einer festen Schwelle liegt; und wenn, und nur wenn der Satz an Bedingungen geprüft ist, der Knoten angepasst ist, um in Abhängigkeit von den im Vorgang i/ aktualisierten Informationen eine Bewertung des Clusters auszulösen, und für den Fall, dass er im Laufe der Bewertung bestimmt, dass eine Aktion zum Fusionieren des Clusters mit einem anderen Cluster oder Unterteilen des Clusters oder Abgehen eines oder mehrerer Knoten des Clusters zu einem anderen Cluster durchzuführen ist, um die Aktion bei den Knoten des Clusters auszulösen;
der Knoten (20), wenn er Teil eines Clusters ist, angepasst ist, um die Schritte i bis iv zu wiederholen, egal ob eine neue Konfiguration umgesetzt worden ist oder nicht, eine Aktion zum Fusionieren oder Unterteilen oder Abgehen umgesetzt worden ist oder nicht.

8. Knoten (20) nach Anspruch 7, wobei der Satz an Bedingungen in Bezug auf die Konfiguration eine oder mehrere Bedingungen in Bezug zur Konfiguration umfasst aus:
- keine Auslösung einer neuen Konfiguration ist im Schritt iii des laufenden Zyklus ausgelöst worden;
- eine Zeit länger als eine vordefinierte Mindestschwelle ist seit der letzten Konfigurationsänderung abgelaufen;
- die aktuelle Konfiguration seit den letzten θ_{stab} Zyklen wird implementiert, wobei θ_{stab} ein vordefinierter ganzzahliger Wert ist.

9. Knoten (20) nach einem der Ansprüche 7 bis 8, der angepasst ist, um bei der Auswahl einer Cluster-Konfiguration einen Vorgang zur Benennung eines neuen Cluster-Hauptknotens aus den Knoten des Clusters in Abhängigkeit von den aktualisierten Informationen durchzuführen, und um innerhalb einer gleichen Nachricht, den neuen ausgewählten logischen Kanal und die Angabe des benannten neuen Cluster-Hauptknotens an die Knoten des Clusters zu senden.

10. Drahtloses Ad-hoc-Kommunikationsnetz (10) mobiler Knoten, das eine Vielzahl mobiler Knoten (20) nach einem der Ansprüche 7 bis 9 beinhaltet.

## Claims

1. Method for dynamically implementing joint node clustering and cluster configuration selection within an ad hoc wireless communication network (10) of mobile nodes (20), a cluster comprising nodes, including a node designated as cluster head, which share at least one common logical channel assigned to the cluster, said method being **characterised in that**:
each node (20) of a cluster is required to iterate the operating cycle comprising the following steps:
i/ triggering a neighbourhood discovery step which determines updated information comprising the identification of neighbouring node(s) and the computation of indices of the quality of the radio links between said neighbouring nodes and said node (20);
ii/ collection by the cluster head node of said information updated by the nodes of said cluster and updating of configuration metrics according to said information;
iii/ selection of a cluster configuration by the cluster head node according to the updated configuration metrics, the selection of the configuration comprising at least the selection of the logical channel associated with the cluster and, if the selected configuration is different from the current configuration of the cluster, triggering, by the cluster head node in each node of the cluster, the implementation of the new selected configuration; then
iv/ verification that a set of conditions relating to the configuration implemented in the cluster is correctly met, said set of conditions determining whether the stability of the configuration implemented in the cluster is greater than a fixed threshold; and if, and only if, the set of conditions is met, triggering of an evaluation of the cluster by the cluster head node according to the information updated in step i/ and in the case where said evaluation step determines that an action of merging the cluster with another cluster or of dividing the cluster or of moving one or more nodes of the cluster to another cluster is to be carried out, implementation of said action following the triggering of said action in the nodes of the cluster; if the set of conditions is not met, step v is implemented directly;
v/ iteration of steps i to iv, regardless of whether a new configuration has been implemented or not, and regardless of whether a merging or dividing or moving action has been implemented or not.

2. Method for dynamically implementing joint node clustering and cluster configuration selection according to claim 1, in which said set of conditions relating to the configuration comprises one or more of:
- no new configuration trigger has been triggered in step iii of the current cycle;
- a time greater than a predefined minimum threshold has elapsed since the last configuration change;
- the current configuration has been implemented since the last θ_{stab} cycles, where θ_{stab} is a predefined integer value.

3. Method for dynamically implementing joint node clustering and cluster configuration selection according to any one of the preceding claims, in which, in the cluster configuration step, the cluster head node performs an operation of designating a new cluster head from among the nodes of the cluster according to said updated information and the cluster head node transmits to the nodes of the cluster, within the same message, the new logical channel selected and the indication of the new designated cluster head.

4. Method for dynamically implementing joint node clustering and cluster configuration selection according to any one of the preceding claims, in which, in the step of evaluating the cluster:
- it is determined in advance by the cluster head node, according to said updated information, whether the cluster meets a set of conditions defining the required characteristics of a cluster, and if it is determined that the cluster does not meet said conditions, a cluster division is evaluated by the cluster head node, and then triggered if appropriate;
- if it is determined that the cluster meets said conditions, an operation of merging the cluster or moving a subset of nodes from the cluster to another existing cluster is evaluated by the cluster head node according to said updated information, and then triggered if appropriate.

5. Method for dynamically implementing joint node clustering and cluster configuration selection according to any one of the preceding claims, in which, at the end of the operating cycle, the formula of a metric as a function of the updated information which is used in step iii to select a configuration and whose calculation in a given cycle is a function of a value calculated in the preceding cycle is modified by replacing said value with another value.

6. Computer program product intended to be installed in the memory of a mobile node (20) of a wireless ad hoc communication network (10) and to be executed on a microprocessor of the node, said computer program comprising software instructions which, when executed on the microprocessor, implement the steps, incumbent on said node, of a method according to any one of claims 1 to 5.

7. Mobile node (20) of a wireless ad hoc communication network (10) of mobile nodes in which one or more clusters comprising nodes, including a node designated as cluster head, share at least one common logical channel assigned to the cluster, said node being **characterised in that**:
i/ the node (20) is suitable, if it is part of a cluster, for triggering a neighbourhood discovery step which determines updated information comprising the identification of neighbouring node(s) and the computation of indices of the quality of the radio links between said neighbouring nodes and said node, and for sending this updated information to the cluster head node;
ii/ if it is a cluster head, the node (20) is suitable for collecting the information updated by the nodes of said cluster and updating configuration metrics according to said information;
iii/ if it is a cluster head: the node (20) is suitable for selecting a cluster configuration according to the updated configuration metrics, the selection of the configuration comprising at least the selection of the logical channel associated with the cluster and, if the selected configuration is different from the current configuration of the cluster, and the node is suitable for triggering, in each node of the cluster, the implementation of the new selected configuration; then
iv/ if it is a cluster head: the node (20) is then suitable for verifying whether a set of conditions relating to the configuration implemented in the cluster is correctly met, said set of conditions determining whether the stability of the configuration implemented in the cluster is greater than a fixed threshold; and if, and only if, the set of conditions is met, the node is suitable for triggering an evaluation of the cluster according to the information updated in operation i/ and, if it determines during said evaluation that an action of merging the cluster with another cluster or of dividing the cluster or of moving one or more nodes of the cluster to another cluster is to be carried out, for triggering said action in the nodes of the cluster;
the node (20), if it is part of a cluster, is suitable for iterating operations i to iv, regardless of whether a new configuration has been implemented or not, and regardless of whether a merging or dividing or moving action has been implemented or not.

8. Node (20) according to claim 7, wherein said set of conditions relating to the configuration comprises one or more conditions relating to the configuration from:
- no new configuration trigger has been triggered in step iii of the current cycle;
- a time greater than a predefined minimum threshold has elapsed since the last configuration change;
- the current configuration has been implemented since the last 8ₛt_{ab} cycles, where θ_{stab} is a predefined integer value.

9. Node (20) according to any one of claims 7 to 8, suitable for, at the time of the cluster configuration selection, performing an operation of designating a new cluster head from among the nodes of the cluster according to said updated information and for transmitting to the nodes of the cluster, within the same message, the new logical channel selected and the indication of the new designated cluster head.

10. Ad hoc wireless communication network (10) of mobile nodes, comprising a plurality of mobile nodes (20) according to any one of claims 7 to 9.
